(19) Europäisches Patentamt
European Patent Office
Office européen des brevets

(11) Veröffentlichungsnummer: **0 014 222**
**A1**

(12) # EUROPÄISCHE PATENTANMELDUNG

(21) Anmeldenummer: **79100358.5**

(22) Anmeldetag: **08.02.79**

(51) Int. Cl.³: **C 08 F 8/30**
C 08 F 8/00, B 01 J 45/00

(43) Veröffentlichungstag der Anmeldung:
**20.08.80 Patentblatt 80/17**

(84) Benannte Vertragsstaaten:
**BE FR GB IT NL SE**

(71) Anmelder: **RIEDEL-DE HAEN AKTIENGESELLSCHAFT**
**Wunstorfer Strasse 40**
**D-3016 Seelze 1(DE)**

(72) Erfinder: **Lieser, Karl-Heinrich, Prof. Dr.**
**Karolinenstrasse 5**
**D-6101 Seeheim(DE)**

(72) Erfinder: **Griesbach, Manfred, Dipl.-Ing.**
**Pallaswiesenstrasse 37**
**D-6100 Darmstadt(DE)**

(72) Erfinder: **Burba, Peter, Dr.**
**Mannheimer Strasse 37**
**D-6840 Lampertheim(DE)**

(74) Vertreter: **Meyer-Dulheuer, Karl-Hermann, Dr. et al.**
**HOECHST Aktiengesellschaft Zentrale Patentabteilung**
**Postfach 80 03 20**
**D-6230 Frankfurt/Main 80(DE)**

(54) **Ionenaustauscher auf Basis von Polyaminen, Verfahren zu ihrer Herstellung und ihre Anwendung.**

(57) Ionenaustauscher auf Basis von Polyaminen, wie z. B. Aminopolystyrol mit direkt an das Polystyrol gebundenen Ankergruppen von Aminocarbonsäuren weisen nur geringe Selektivität auf.

Hohe Selektivität weisen Ionenaustauscher auf Basis von Polyaminen der Formel P - N = N - R auf, worin P der Rest eines Polyamins und R eine mehrzähnige mit Metallionen oder Anionen Chelatkomplexe bildende Gruppe ist.

Sie lassen sich nach einem Verfahren herstellen, bei dem die Polyamine diazotiert und mit kupplungsfähigen, mit Metallionen oder Anionen Chelatkomplexe mit hoher Stabilität und einem sich rasch einstellenden Austauschgleichgewicht bildenden Verbindungen umgesetzt werden. Bevorzugt wird als kupplungsfähige Verbindung ein mehrzähniges chelatbildendes organisches Reagenz und als Polyamin makroporöses Aminopolystyrol eingesetzt und bei der Kupplungsreaktion die Bildung phenolischer Hydroxylgruppen durch Zusatz von Reduktionsmitteln unterbunden.

Die erfindungsgemäßen Ionenaustauscher lassen sich zur selektiven Abtrennung bestimmter Metallionen oder Anionen aus wäßrigen oder organischen Lösungen verwenden, insbesondere zur selektiven Abtrennung von in Meerwasser enthaltenen Spurenelementen.

EP 0 014 222 A1

0014222



HOECHST AKTIENGESELLSCHAFT HOE 77/D 012 Dr.KO/wö

Ionenaustauscher auf Basis von Polyaminen, Verfahren zu ihrer Herstellung und ihre Anwendung

Die Erfindung bezieht sich auf Ionenaustauscher auf Basis von Polyaminen, auf Verfahren zur ihrer Herstellung und auf ihre Anwendung.

Ionenaustauscher werden auf dem Gebiet der analytischen Chemie und der präparativ technischen Chemie zur Abtrennung von Ionen aus Lösungen eingesetzt. Sie bestehen aus einem mehr oder minder porösen, meist polymeren Grundgerüst, das austauschfähige Gruppen trägt. Zur Herstellung von Ionenaustauschern werden an einem geeigneten Grundgerüst austauschfähige Gruppen erzeugt oder entsprechende reaktive Verbindungen daran gebunden.

Es ist bekannt, Polyamine, z.B. Aminopolystyrol, zu diazotieren und mit reaktiven Verbindungen zu kuppeln. I.R. Parrish, Chemistry and Industry 1956, 137 verwendete als reaktive Verbindung ß-Hydroxychinolin, R. V. Davies et al., J. Appl. Chem. 9 (1959) 368 setzten o-Hydroxyphenylarsonsäure, Salicylsäure und Kojisäure ein. Auf biochemischem Gebiet sind Kupplungs-

reaktionen von Polystyroldiazoniumchlorid mit Enzymen bei H. Filipusson und W.E. Hornby, Biochem. J. 120 (1), 215 (1970) beschrieben.

Auch M.Y. Romankevich, V.G. Sinyavskii, M.P. Tsygankova, Ukr. Khim. Zh. 28 (9), 1096 (1962), V.G. Sinyavskii, A.I. Turbina, M.Y. Romankevich, Dopovidi Akad. Nauk Ukr. RSR 1963 (5), 613, V.G. Sinyvskii, A.I. Turbina, M.Y. Romankevich, Vysokomolekul. Soedin., Khim. Svoistva i Modifikatsiya Polimerov, Sb. Statei 1964, 204 kuppelten eine Reihe von Verbindungen - in der Hauptsache Phenolderivate - mit Polystyroldiazoniumchlorid, ohne jedoch die erhaltenen Produkte näher zu charakterisieren.

Basilevskaya et al., Ukr. Khim. Zh. 32 (7), 722 (1966) versuchten einen Kationenaustauscher aus Polystyroldiazoniumchlorid und 8-Hydroxychinolin zu synthetisieren. Über die Gleichgewichtseinstellung sowie Trennprobleme wurde jedoch nichts erwähnt.

Die bisher bekannten Verfahren zur Kupplung von diazotierten Polyaminen, wie Aminopolystyrol, mit Liganden, die Metallionen oder Anionen unter Bildung von Chelatkomplexen bilden, geben keine optimalen Reaktionsbedingungen an. Die Frage, welche Kapazität die erhaltenen Verbindungen aufweisen und mit welcher Geschwindigkeit die Gleichgewichtseinstellung abläuft, bleibt offen. Über Kupplungsprodukte aus Polyaminen mit mehrzähnigen Liganden und über deren Verwendung zur selektiven Trennung verschiedener Ionen wurde bisher noch überhaupt nichts berichtet. Schließlich wurde auch die Möglichkeit, makroporöse Austauscher herzustellen, bisher nicht untersucht.

Es ist zwar bekannt, chelatbildende Austauscher einzusetzen, die Iminodiessigsäure als Ankergruppe enthalten. Diese werden aber durch Aminierung von Chlorderivaten des Polystyrol mit Ammoniak und anschließender Carboxymethylierung der Aminogruppen mit Chloracetat hergestellt (R. Hering,

Chelatbildende Ionenaustauscher, Akademie-Verlag Berlin 1967). Durch diese Synthese sind ausschließlich Austauscher mit Iminodiessigsäure oder anderen Aminocarbonsäuren als Ankergruppen zugänglich. Sie besitzen viele Anwendungsmöglichkeiten. Ein wichtiger Nachteil ist aber, daß die Ankergruppen meistens nur bis zu drei Koordinationsstellen für eine Komplexbildung zur Verfügung stellen. Außerdem ist die Selektivität nicht besonders ausgeprägt. Es werden beispielsweise Erdalkaliionen und Lanthaniden etwa ebenso stark gebunden wie Schwermetallionen. Als weitere Nachteile werden die langsame Gleichgewichtseinstellung und die starke Tendenz zur Quellung hervorgehoben (D.E. Leyden, A.L. Undrwood, J.phys.Chem. 68, (1964), 2093).

Es wurden nun mehrzähnige, chelatbildende Ionenaustauscher auf der Basis von Polyaminen, insbesondere auf Basis von Aminopolystyrol der Formel

$$P - N = N - R$$

gefunden, wobei P der Rest eines Polyamins und R eine mehrzähnige, mit Metallionen oder Anionen Chelatkomplexe bildende Gruppe ist.

Als Rest R eignen sich Liganden, die sich beispielsweise vom Dinatriumsalz der Brenzcatechindisulfonsäure-(3,5) (Tiron) oder von Bis-(salicyliden)-1,2-diaminoäthan, Bis-(salicyliden)-phenylendiamin, Glyoxal-bis-(2-hydroxyanil), Äthylendiamin-N,N'-bis-(o-hydroxyphenylessigsäure), N,N'-Di-(2-Hydroxybenzyl)-äthylendiamin-N,N'-diessigsäure, Alizarin, Dithizon, Thenoyltrifluoroaceton und ähnlichen, an sich bekannten mit Metallionen oder Anionen Chelatkomplexe bildenden mehrzähnigen Verbindungen ableiten.

Z.B. eignen sich weiterhin als Liganden:
4,5-Dihydroxynaphthalin-disulfonsäure-(2,7) (Chromotropsäure)
1,2-Dihydroxyanthrachinon (Alizarin)

1,2,5,8-Tetrahydroxyanthrachinon (Chinalizarin)
3,5,7,2',4'-Pentahydroxyflavon (Morin)
1,2,3-Trihydroxybenzol (Pyrogallol)
4-Methoxy-2-(thiazolyl-(2)-azol-phenol (TAM)
1,5-Diphenylcarbazid
5-(4-Dimethylaminobenzyliden)-rhodanin (DMABR)

Derartige Ionenaustauscher werden dadurch hergestellt, daß Polyamine in an sich bekannter Weise diazotiert und dann mit kupplungsfähigen, mehrzähnigen, mit Metallionen oder Anionen Chelatkomplexe bildenden Verbindungen umgesetzt werden. Geht man beispielsweise von Polystyrol aus, so wird dieses zuerst nitriert, dann reduziert und diazotiert, schließlich mit geeigneten Chelatbildnern gekuppelt.

Die so hergestellten Austauscher haben eine Kapazität von etwa 0,8 bis 1,5 mMol/g. Sie zeichnen sich beim Austausch durch eine sehr schnelle Gleichgewichtseinstellung und außerdem durch eine hohe Stabilität aus.

Damit unterscheiden sie sich von den Polystyrol-Iminoessigsäure-Austauschern des Standes der Technik, deren Nachteile sie nicht besitzen. So können Austauscher mit mehr als drei Koordinationsstellen für die Komplexbildung hergestellt werden. Die Gleichgewichtseinstellung erfolgt ebenso rasch wie bei normalen Harzaustauschern auf Polystyrolbasis. Auch das Quellvermögen ist ähnlich wie bei normalen Harzaustauschern und richtet sich in erster Linie nach dem Vernetzungsgrad. Vor allen Dingen kann aber durch die in dieser Anmeldung beschriebene Synthese eine Vielzahl von Austauschern mit einer grossen Variationsbreite an Ankergruppen hergestellt werden, die ganz spezielle gewünschte Austauscheigenschaften für bestimmte Elemente besitzen. Als Ankergruppen kommen alle Gruppen in Frage, die sich an Diazoniumgruppen kuppeln lassen. Damit werden hohe Selektivitäten erreicht, entweder für Gruppentrennungen (z.B. Schwermetalle / Erdalkalielemente) oder für einzelne Elemente (z.B. Uran, Edelmetalle u.a.).

Als besonders vorteilhaft hat es sich erwiesen, wenn makroporöse Austauscher, die sich ausgehend von makroporösem Aminopolystyrol herstellen lassen, eingesetzt werden. Hier findet eine besonders rasche Gleichgewichtsteinstellung statt.

Ein weiterer Vorteil des beanspruchten Verfahrens wird dann erreicht, wenn bei der Kupplungsreaktion die Bildung von sonst möglicherweise störender phenolischen Hydroxylgruppen durch Zusatz von Reduktionsmitteln unterbunden wird.

Das erfindungsgemäße Verfahren zur Darstellung der beanspruchten Ioneraustauscher besteht bei Verwendung von Aminopolystyrol als Basis aus folgenden beiden Abschnitten:

Polystyrol wird zunächst nitriert, dann reduziert und diazotiert, wie es durch nachfolgendes Reaktionsschema dargestellt werden kann:

$$PS \xrightarrow{\text{Nitriersäure}} PS\text{-}NO_2$$

$$\xrightarrow{\text{Reduktion}} PS\text{-}NH_2$$

$$\xrightarrow{NANO_2/HCl} [PS\text{-}N=N]^+ \; Cl^-$$

PS bedeutet hierbei Polystyrol.

Das so erhaltene Polystyroldiazoniumchlorid wird dann mit mehrzähnigen kupplungsfähigen Liganden, die mit Metallionen oder Anionen Chelatkomplexe bilden, umgesetzt. Kupplungsfähig sind Liganden dann, wenn sie aromatische Amino- oder Hydroxylgruppen enthalten. Nachfolgendes Reaktionsschema verdeutlicht dies:

$$[PS\text{-}N=N]^+ \; Cl^- + RH$$

$$\xrightarrow{HCl} PS\text{-}N=N\text{-}R$$

R hat hierbei die oben erwähnte Bedeutung.

Da es oft wichtig ist, die Bildung phenolischer OH-Gruppen, die beim Ionenaustausch störend wirken können, zu unterbinden, besteht eine wichtige Variante des Verfahrens darin, den Austausch der nicht gekuppelten Diazoniumgruppe gegen Wasserstoff durch Behandeln z.B. mit hypophosphoriger Säure oder mit Salzen, Estern oder Amiden der Ameisensäure zu bewirken. Hierfür geeignete Methoden sind beschrieben in Houben-Weyl, Methoden der Organischen Chemie, 10/3, 131 und 137.

Die so erhaltenen Ionenaustauscher eignen sich hervorragend zur selektiven Abtrennung von Ionen aus wäßrigen oder organischen Lösungen. Hierbei kann man die zu untersuchende Lösung über eine Trennsäule geben, die den Ionenaustauscher enthält. Insbesondere Spurenelemente können in einfacher Weise auch dadurch abgetrennt werden, daß man die zu untersuchende Lösung durch Filterschichten laufen läßt, die den Ionenaustauscher enthalten.

Insbesondere können die erfindungsgemäßen Ionenaustauscher zur selektiven Abtrennung von in Meerwasser enthaltenen Spurenelementen, wie z.B. Gold oder Uran, eingesetzt werden. Zur Abtrennung von Uran eignet sich insbesondere ein Austauscher mit dem 1-(2-Hydroxyphenylazo)-2-naphthol-Rest als Ligand.

Einzelheiten der Herstellung der beanspruchten Ionenaustauscher und ihrer Verwendung sind in den folgenden Beispielen beschrieben.

Beispiele:

1. Herstellung und Verwendung eines Ionenaustauschers mit <u>Brenzkatechin-disulfonsäure-(3,5) (Tiron)</u>

A <u>Nitrierung von Polystyrol</u>
10 g Polystyrol, das mit 2 % Divinylbenzol vernetzt war und einen Korndurchmesser von 0,1 bis 0,2 mm

aufwies, (bezogen von der Firma Permutit AG) wurden in 100 ml Nitriersäure (Mischung aus 75 Gew.-% 86 %iger $HNO_3$ und 25 Gew.-% 95 - 97 %iger $H_2SO_4$) eingebracht, deren Temperatur $0^oC$ betrug. Das Reaktionsgefäß wurde mit Eis gekühlt. Nach 3 Minuten Reaktionszeit wurde das Gemisch auf 1 l kleingestoßenes Eis gegossen und das Produkt abfiltriert. Es wurde mit 0,1 normaler NaOH sowie destilliertem Wasser gewaschen und 24 Stunden in einer Trockenpistole über $P_4O_{10}$ im Vakuum getrocknet. Die Farbe des nitrierten Polystyrols war hellgelb, die Ausbeute betrug 14 g. Eine Stickstoffanalyse ergab einen Gehalt von 10,57 Gew.-%. (Vergl. zu diesem Reaktionsschritt auch H. Zenftman, J. Cehm. Soc. 1050, 982, und M. Kucharski, Polymery 11 (6), 253 (1966).

In einem weiteren Versuch wurde anstelle des oben verwendeten Polystyrols ein makroporöses Polystyrol, vernetzt mit 3 % Divinylbenzol, Korndurchmesser 0,1 bis 0,2 mm, (Handelsname Lewatit$^{(R)}$ E 559/75 der Firma Bayer AG) eingesetzt.

B Reduktion von nitriertem Polystyrol

10 g nitriertes Polystyrol wurden in eine Mischung, bestehend aus 131 g $SnCl_2$ . 2 $h_2O$, 131,4 ml rauchender HCl sowie 148,6 ml Äthanol, eingebracht und 24 Stunden unter Rückfluß erhitzt. Das Produkt wurde abfiltriert, mit destilliertem Wasser, mit 1 l 2 normaler NaOH und wieder mit destilliertem Wasser gewaschen. Dann wurde das Produkt 24 Stunden lang in einer Trockenpistole über $P_4O_{10}$ im Vakuum getrocknet. Die Farbe des Aminopolystyrols war hellbraun, die Ausbeute betrug 8 g , der Reduktionsgrad war 98 %. (Für diesen Reaktionsschritt finden sich Literaturhinweise bei M. Kucharski, Polymeri 11 (6), 253 (1966) und R.V. Davies et al., J. Appl. Chem. 9, 368 (1959).

Die Reduktion kann aber auch nach anderen an sich bekannten Verfahren, z.B. mit $Na_2S$ . 9 $H_2O$ und Schwefel im Autoklaven (M. Kucharski, Polimery 11 (6), 253 (1966)) oder in Phenylhydrazinlösung (H. Seliger, Makromol. Chemie 169, 83 (1973)) durchgeführt werden. Eine weitere Methode besteht in der Reduktion in alkalischer $Na_2S_2O_4$-Lösung (Y. Yagi, K. Engel, D. Pressman, J. Immunol. 85, 375 (1960); H. Filippusson, W.E. Hornby, Biochem. J. 120 (1), 215 (1970).

C Diazotierung von Aminopolystyrol

Eine Lösung aus 50 ml rauchender HCl und 50 ml destilliertem Wasser wurde auf 0°C gekühlt. Darin wurden 2 g Aminopolystyrol unter Rühren suspendiert. Anschließend wurde eine Lösung aus 8,5 g $NaNO_2$ in 25 ml destilliertem Wasser hinzugetropft. Die Zugabe erfolgte im Verlaufe einer Stunde. Die Temperatur wurde während der Reatkion mit einem Eis-Kochsalz-Bad bei 0°C gehalten. Das Diazoniumprodukt wurde abfiltriert und mit destilliertem Wasser, das einige Gramm NaCl gelöst enthielt, neutral gewaschen. Die weitere Umsetzung des Diazoniumproduktes erfolgte sofort anschließend.

D Kupplung des Diazoniumsalzes

Das Polystyroldiazoniumchlorid wurde bei 10°C in eine Lösung von 8 g des Dinatriumsalzes von Brenzcatechindisulfonsäure-(3,5) (Tiron) in 260 ml destilliertem Wasser gegeben. Der pH-Wert der Lösung wurde durch Zugabe von NaOH-Lösung auf 12,5 eingestellt. Die Reaktionsmischung wurde unter Rühren 5 Minuten bei 10°C gehalten.

Anschließend wurde das Kupplungsprodukt abfiltriert, mit verdünnter HCl und destilliertem Wasser gewaschen und im Vakuum 24 Stunden über $P_4O_{10}$ getrocknet. Die Ausbeute betrug 2,4 g. Die Farbe des Austauschers in der $H^+$-Form war dunkelbraun. Die Kapazität wurde

durch Titration und Stickstoffanalyse zu 1,0 mMol/g bestimmt. Die Austauschgleichgewichte waren nach 5 Minuten vollständig eingestellt.

Statt das Kupplungsprodukte zu trocknen, kann es auch nach dem Waschen mit Wasser und Aceton unter 1 molarer NaCl-Lösung aufbewahrt werden.

Um das Vorhandensein phenolischer OH-Gruppen mit Sicherheit auszuschließen, kann das Kupplungsprodukt vor der Reinigung mit einer wäßrigen Natriumformiat-Lösung (1 %) behandelt werden.

E Verwendung des Ionenaustauschers

1 l einer 0,1 molaren NaCl-Lösung, die 1 ppm $Fe^{3+}$ Ionen enthielt, wurde über eine Austauschersäule (Höhe der Säulenfüllung 4 cm, Durchmesser 1,3 cm) mit einer Kapazität von 1,32 mMol gegeben. Die Eisenionen wurden zum Zwecke der quantitativen Bestimmung mit Fe-59 markiert. Der pH-Wert der Lösung betrug 3,44. Die angebotene Eisenmenge entsprach 1,36 % der Gesamtkapazität des Austauschers. Die Durchlaufgeschwindigkeit betrug etwa 2 ml/Minute. Erst nach Durchsatz von 600 ml erschien das Eisen mit einer Konzentration in Höhe von 0,75 % der aufgegebenen Lösung im Eluat.

2. Herstellung eines Ionenaustauschers mit Bis-(salicyliden)-1,2-diaminoäthan

In gegenüber dem Verfahren des Beispiels 1 etwas abgeänderter Weise konnte auch Bis-(salicyliden)-1,2-diaminoäthan (ein vierzähniger Ligand) auf der Polystyrolmatrix fixiert werden: Dazu wurden 5,36 g Bis-(salicyliden)-1,2-Diaminoäthan sowie 0,8 g NaOH-Plätzchen in 300 ml Aceton und 50 ml destilliertem Wasser gelöst. 2 g des Polystyroldiazoniumchlorids wurden bei 10°C in diese Lösung eingebracht. Die Reaktionszeit betrug 5 Minuten. Die Aufarbeitung erfolgte wie oben beschrieben. Die

Farbe des Austauschers war dunkelviolett, die Ausbeute 2,5 g, seine Kapazität 1,2 mMol/g.

3. Herstellung von Austauschern mit verschiedenen Ankergruppen

Nach der in Beispiel 1 D gegebenen Verfahrensvorschrift wurden unter Abwandlung von Mengen, Lösungsmitteln, Reaktionszeiten und-temperaturen verschiedene kupplungsfähige, mit Metallionen oder Anionen Chelatkomplexe tildende organische Reagenzien (Ankergruppen) mit Polystyroldiazoniumchlorid umgesetzt. Die Einzelbedingungen sind mit der Kapazität des jeweils erhaltenen Austauschers in Tabelle 1 zusammengefaßt.

Tabelle 1 — Zusammenstellung der Ansätze (je 10 g Polystyroldiazoniumchlorid)

| Nr. 1 | Ankergruppe | Menge | Lösungsmittel | Reaktionszeit | Kapazität des erhaltenen Austauschers |
|---|---|---|---|---|---|
| 1 | Brenzcatechindisulfonsäure-(3,5) (Tiron) | 30 mMol (10 g) | 500 ml dest. $H_2O$ 7,2 g NaOH | 5 Min. 10 °C | 1,0 mMol/g |
| 2 | 4,5-Dihydroxynaphthalindisulfonsäure-(2,7) (Chromotropsäure) | 30 mMol (12 g) | 500 ml dest. $H_2O$ 7,2 g NaOH | 5 Min. 10 °C | 0,5 mMol/g |
| 3 | Alizarin | 30 mMol (7,2 g) | 500 ml dest. $H_2O$ 7,2 g NaOH | 5 Min. 10 °C | 0,7 mMol/g |
| 4 | 1,2,5,8-Tetrahydroxyanthrachinon (Chinalizarin | 30 mMol (8,[illegible] g) | 500 ml dest. $H_2O$ 7,2 g NaOH | 5 Min. 10 °C | 0,5 mMol/g |
| 5 | Morin | 30 mMol (10,2 g) | 500 ml dest. $H_2O$ 14,4 g NaOH | 5 Min. 10 °C | 0,7 mMol/g |
| 6 | 1,2,3-Trihydroxybenzol (Pyrogallol) | 30 mMol (3,8 g) | 500 ml dest. $H_2O$ 9,6 g NaOH | 5 Min. 10 °C | 1,4 mMol/g |
| 7 | 4-Methoxy-2-/Thiazolyl-(2)-azo/-phenol (TAM) | 30 mMol (7,1 g) | 500 ml dest. $H_2O$ 8 g NaOH | 5 Min. 10 °C | 1,0 mMol/g |
| 8 | 1-/Thenoyl-(2')/-3,3,3-trifluoraceton (TTA) | 30 mMol (6,7 g) | 500 ml dest. $H_2O$ 4,8 g NaOH | 5 Min. 10 °C | 1,2 mMol/g |
| 9 | Äthylendiamin-N,N'-bis-10-hydroxyphenylessigsäure | 30 mMol (10,8 g) | 500 ml dest. $H_2O$ 16,8 g NaOH | 5 Min. 10 °C | 1,0 mMol/g |
| 10 | Glyoxal-bis-(2-hydroxyanil) | 30 mMol (7,2 g) | 500 ml dest. $H_2O$ 2500 ml Methanol 7,2 g NaOH | 5 Min. 10 °C | 0,9 mMol/g |

Tabelle 1 (Forts.) Zusammenstellung der Ansätze (je 10 g Polystyroldiazoniumchlorid)

| Nr. 1 | Ankergruppe | Menge | Lösungsmittel | Reaktionszeit | Kapazität des erhaltenen Austauschers |
|---|---|---|---|---|---|
| 11 | 1,5-Diphenylthiocarbazon (Dithizon) | 30 mMol (7,7 g) | 800 ml Eisessig 200 ml dest. $H_2O$ | 120 Min. 5-10$^{\circ}$C | 1,1 mMol/g |
| 12 | 1,5-Diphenylcarbazid | 30 mMol (7,3 g) | 8CC ml Eisessig 200 ml dest. $H_2O$ | 120 Min. 5-10$^{\circ}$C | 0,8 mMol/g |
| 13 | 5-(4-Dimethylaminobenzyliden)-rhodanin | 30 mMol (7,92 g) | 800 ml Eisessig 200 ml. dest. $H_2O$ | 120 Min. 5-10$^{\circ}$C | 1,5 mMol/g |

4. Vergleich der Verteilungskoeffizienten

Die guten Trenneigenschaften der hier beschriebenen Austauscher ergeben sich bereits aus den Verteilungskoeffizienten für verschiedene Ionen als Funktion der pH-Werte. Als Beispiele sind in Fig. 1 die Verteilungskoeffizienten $logK_d$ für verschiedene Ionen am Polystyrol-Austauscher mit der Ankergruppe Äthylendiamin-N,N'-bis-(o-hydroxyphenylessigsäure) als Funktion des pH-Werts aufgezeichnet. Diese Verteilungskoeffizienten wurden in 0,5 M NaCl, bzw. für $Hg^{2+}$ in 0,5 M $Na_2SO_4$, aufgenommen. In Fig. 2 sind die Verteilungskoeffizienten $LogK_d$ für verschiedene Ionen am Polystyrolaustauscher mit der Ankergruppe 4-Methoxy-2-(thiazolyl-(2)-azo)-phenol als Funktion des pH-Werts aufgezeichnet. Auch diese Verteilungskoeffizienten wurden in 0,5 M NaCl, bzw. für $Hg^{2+}$ in 0,5 M $Na_2SO_4$, bestimmt. In Fig. 3 schließlich sind die Verteilungskoeffizienten $logK_d$ für einen Polystyrolaustauscher mit Iminodiessigsäure als funktioneller Gruppe entsprechend dem Stand der Technik aufgezeichnet.

Die Abbildungen lassen erkennen, daß die Unterschiede in den Verteilungskoeffizienten für den Austauscher gemäß Stand der Technik sehr viel geringer sind als für die anderen beiden Polystyrol-Austauscher. Dementsprechend kann sowohl bei Gruppentrennungen als auch bei der Abtrennung von einzelnen Elementen mit den hier beschriebenen Austauschern eine sehr viel höhere Selektivität erreicht werden. Da eine große Vielzahl von Ankergruppen zur Verfügung steht, können die jeweils am besten geeigneten Substanzen für eine bestimmte Trennaufgabe ausgewählt werden. So ist die Schwefel enthaltende Ankergruppe 1,5-Diphenylthiocarbazon (Dithizon) für die Abtrennung der folgenden Schwermetalle besonders geeignet: Ag, Au, Bi, Cd, Co, Cu, Fe, Hg, In, Mn, Ni, Pb, Pd, Pt, Sn, Tl, Zn. Die Ankergruppe Glyoxyl-bis-(2-mercaptoanil), die 2 SH-Gruppen enthält, ist für die Abtrennung von $Ag^+$, $Au^{3+}$ und $Hg^{2+}$-Ionen besonders geeignet.

5. Trennungsbeispiele

A. Kupfer-Zink-Trennung

Eine Austauschersäule (Innendurchmesser 1,2 cm) wird mit 2 g eines Austauschers mit der Ankergruppe Iminodiessigsäure (I) und eine zweite gleichartige Säule mit 2 g eines Polystyrol-Austauschers mit Äthylendiamin-N,N'-bis-(o-hydroxyphenylessigsäure) als Ankergruppe (II) gefüllt (Höhe der Säulenfüllung 5,5 cm in 0,1 M NaCl). Die Säulen werden mit einer Durchflußgeschwindigkeit von 0,5 ml/min betrieben. Zunächst werden je 500 ml 0,1 M NaCl (pH 2,50) aufgegeben, dann je 500 ml 0,1 M NaCl, die 0,25 mMol $Cu^{2+}$ und 0,25 mMol $Zn^{2+}$ enthalten (pH 2,50).

Im Auslauf der Säule I werden je 95 % der Kupfer- und der Zinkmenge gefunden. Im Auslauf der Säule II wird nur das Zink gefunden. Das Kupfer kann mit 100 ml 5 M HCl eluiert werden.

B. Kupfer-Blei-Trennung

Es werden die gleichen Trennsäulen verwendet wie im Beispiel 5 A. Auch die Durchflußgeschwindigkeit ist die gleiche. Auf jede Säule werden zunächst 500 ml 0,1 M NaCl (pH 2,50) aufgegeben, dann je 500 ml 0,1 M NaCl, die 0,25 mMol $Cu^{2+}$ und 0,25 mMol $Pb^{2+}$ enthalten (pH 2,50).

Im Auslauf der Säule I werden je 92 % der Kupfer- und der Bleimenge gefunden. Die restlichen 8 % werden mit 100 ml 5 M HCl eluiert. Im Auslauf der Säule II wird nur das Blei gefunden. Das Kupfer wird mit 100 ml 5 M HCl eluiert.

C. Silber-Kupfer-Trennung

Es werden wiederum zwei Trennsäulen verwendet, die die gleichen Abmessungen besitzen wie in Beispiel 5 A. Eine Trennsäule wird mit 2 g eines Austauschers mit Iminodiessigsäure-Ankergruppe gefüllt (I) die andere mit 2 g Polystyrol-Austauscher mit 5-(4-Dimethylaminobenzyliden)-rhodanin als Ankergruppe (II). Beide Säulen werden mit einer Durchflußgeschwindigkeit von 0,83 ml/min. betrieben. Zunächst werden auf beide Säulen je 500 ml 0,1 M $NaNO_3$ (pH 2,00) aufgegeben, dann je 500 ml 0,1 M $NaNO_3$, die 0,2 mMol $Ag^+$ und 0,2 mMol $Cu^{2+}$ enthalten (pH 2,00).

Im Auslauf der Säule I werden 96 % der Silber- sowie 93 % der Kupfermenge gefunden. Die restlichen Mengen an Silber und Kupfer werden mit 100 ml 5 M $HNO_3$ eluiert. Im Auslauf der Säule II wird kein Silber gefunden, dagegen 99 % der aufgegebenen Kupfermenge. Das Silber wird mit 100 ml 0,1 M Thiosulfatlösung eluiert, die 0,5 % Natriumcarbonat enthält.

D. Abtrennung von Quecksilber

Es werden wiederum zwei Säulen verwendet mit den gleichen Abmessungen wie in Beispiel 5 A. Eine Säule entspricht der dortigen Säule I. Die andere Säule ist mit 2 g Polystyrol-Austauscher mit 4-Methoxy-2-(thiazolyl-(2)-azo)-phenol als Ankergruppe gefüllt (II). Beide Säulen werden mit einer Durchflußgeschwindigkeit von 1 ml/min betrieben. Zunächst werden auf beide Säulen 500 ml 0,5 m $NaNO_3$ (pH 1,0) aufgegeben, dann je 500 ml 0,5 M $NaNO_3$, die 0,2 mMol $Hg^{2+}$ enthalten (pH 1,0).

Im Auslauf der Säule I werden 18 % der Quecksilbermenge gefunden. Das restliche Quecksilber wird mit 100 ml 5 M $HNO_3$ bei 80°C eluiert. Bei Zimmertemperatur ist nur ein geringer Teil des Quecksilbers eluierbar. Im Auslauf der Säule II wird kein Quecksilber gefunden. Das Quecksilber wird mit 100 ml 5 M $HNO_3$ bei Zimmertemperatur eluiert.

E. Silber-Blei-Trennung

Es werden die gleichen Trennsäulen verwendet wie in Beispiel 5 A. Eine Säule entspricht der dortigen Säule I, die andere ist mit 2 g Polystyrol-Austauscher mit 5-(4-Dimethylaminobenzyliden)-rhodanin als Ankergruppe gefüllt (II). Die Säulen werden mit einer Durchflußgeschwindigkeit von 0,5 ml/min betrieben. Zunächst werden die Säulen mit 0,1 M $NaNO_3$ (pH 2,00) behandelt. Dann werden jeweils 500 ml 0,1 M $NaNO_3$ durchgeschickt, die jeweils 0,2 mMol $Ag^+$ und 0,2 mMol $Pb^{2+}$ enthalten (pH 2,0).

Im Auslauf der Säule II wird kein Silber gefunden, dagegen 99,7 % der aufgegebenen Bleimenge. Das Silber wird mit 100 ml 0,1 M Thiosulfatlösung eluiert, die 0,5 % Natriumcarbonat enthält. In der Säule I findet keine Trennung statt. Im Auslauf werden 96 % der Silber- sowie 92 % der Bleimenge gefunden.

F. Quecksilber-Zink-Trennung

Es werden die gleichen Säulen verwendet wie im vorstehenden Beispiel 5 B. Auch die Durchflußgeschwindigkeit ist die gleiche. Auf die beiden Säulen werden zunächst jeweils 500 ml 0,1 M $NaNO_3$ (pH 2,00) aufgegeben, dann je 500 ml 0,1 M $NaNO_3$, die 0,2 mMol $Hg^{2+}$ und 0,2 mMol $Zn^{2+}$ enthalten (pH 2,0).

Im Auslauf der Säule II wird kein Quecksilber gefunden, dagegen 100 % der aufgegebenen Zinkmenge. Das Quecksilber wird mit 200 ml 2 M $HNO_3$ eluiert. In der Säule I wird keine Trennung erreicht. Neben 95 % der Zinkfindet man 20 % der Quecksilbermenge im Auslauf. Das restliche Quecksilber wird wie in Beispiel 5 D eluiert.

G. Quecksilber-Cadmium-Trennung

Es werden die gleichen Säulen verwendet wie im Beispiel 5 E. Auch die Durchflußgeschwindigkeit ist die gleiche. Auf beiden Säulen werden zunächst jeweils 500 ml 0,1 M

$NaNO_3$ (pH 2,00) aufgegeben, dann je 500 ml 0,1 M $NaNO_3$, die 0,2 mMol $Hg^{2+}$ und 0,2 mMol $Cd^{2+}$ enthalten (pH 2,00).

Im Auslauf der Säule II wird kein Quecksilber gefunden, dagegen 99,9 % der Cadmiummenge. Das Quecksilber wird mit 200 ml 2 M $HNO_3$ eluiert. In der Säule I wird keine Trennung erreicht. Neben 99 % des Cadmiums findet man 20 % der Quecksilbermenge im Auslauf. Das restliche Quecksilber wird wie in Beispiel 5 D eluiert.

Patentansprüche:

1. Mehrzähniger, chelatbildender Ionenaustauscher auf der Basis von Polyaminen der Formel

$$P - N = N - R$$

wobei P der Rest eines Polyamins und R eine mehrzähnige, mit Metallionen oder Anionen Chelatkomplexe bildende Gruppe ist.

2. Ionenaustauscher nach Anspruch 1, dadurch gekennzeichnet, daß das Polyamin ein Aminopolystyrol ist.

3. Verfahren zur Herstellung von Ionenaustauschern gemäß Anspruch 1 und 2, dadurch gekennzeichnet, daß Polyamine in an sich bekannter Weise diazotiert und dann mit kupplungsfähigen, mit Metallionen oder Anionen Chelatkomplexe mit hoher Stabilität und einem sich rasch einstellenden Austauschgleichgewicht bildenden Verbindungen umgesetzt werden.

4. Verfahren nach Anspruch 3, dadurch gekennzeichnet, daß als kupplungsfähige Verbindung ein mehrzähniges, Chelat bildendes organisches Reagenz eingesetzt wird.

5. Verfahren nach Anspruch 3, dadurch gekennzeichnet, daß als Polyamid makroporöses Aminopolystyrol eingesetzt wird.

6. Verfahren nach Anspruch 3, dadurch gekennzeichnet, daß bei der Kupplungsreaktion die Bildung von phenolischen Hydroxylgruppen durch Zusatz von Reduktionsmitteln unterbunden wird.

7. Verwendung von Ionenaustauschern nach Anspruch 1 und 2, dadurch gekennzeichnet, daß sie zur selektiven Abtrennung bestimmter Metallionen oder Anionen aus wäßrigen oder organischen Lösungen verwendet werden.

FIG. 1

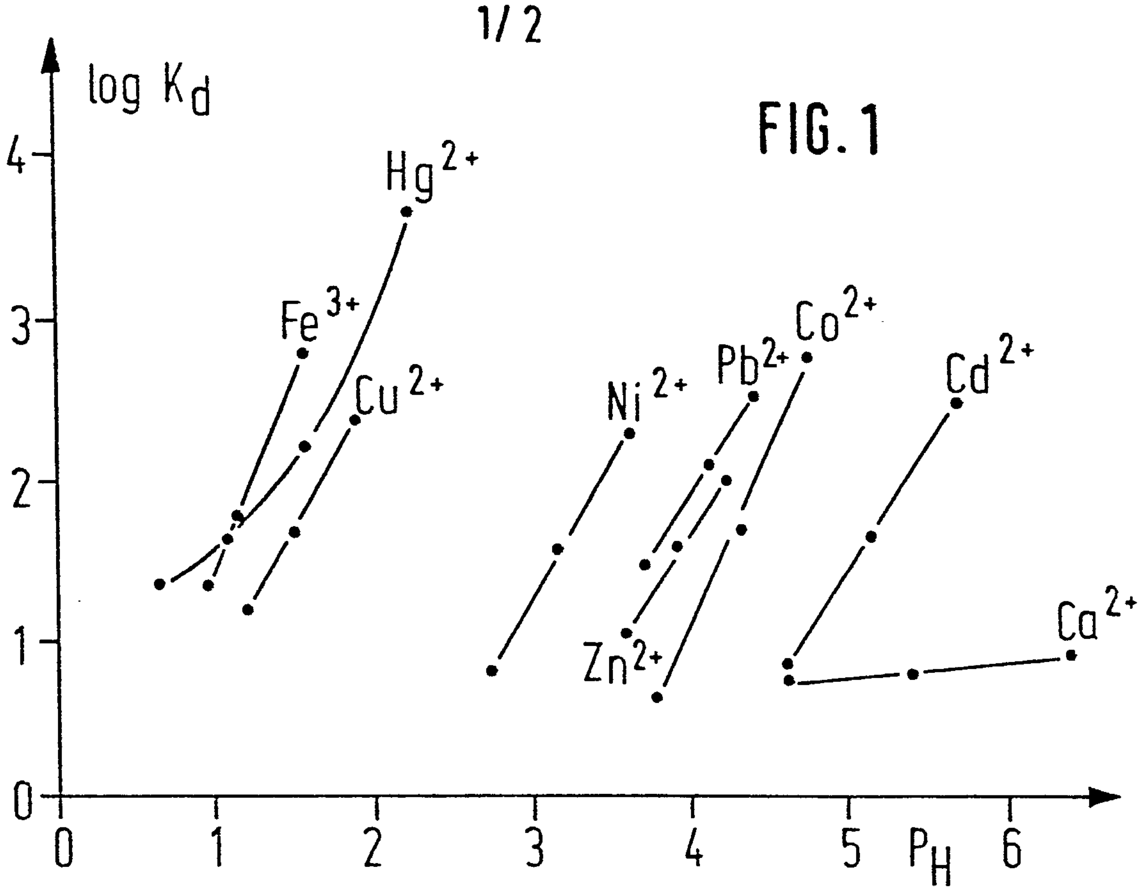
log Kd
4
3
2
1
0
0
1
2
3
4
5
PH
6
$Hg^{2+}$
$Fe^{3+}$
$Cu^{2+}$
$Ni^{2+}$
$Pb^{2+}$
$Co^{2+}$
$Cd^{2+}$
$Zn^{2+}$
$Ca^{2+}$

FIG. 2

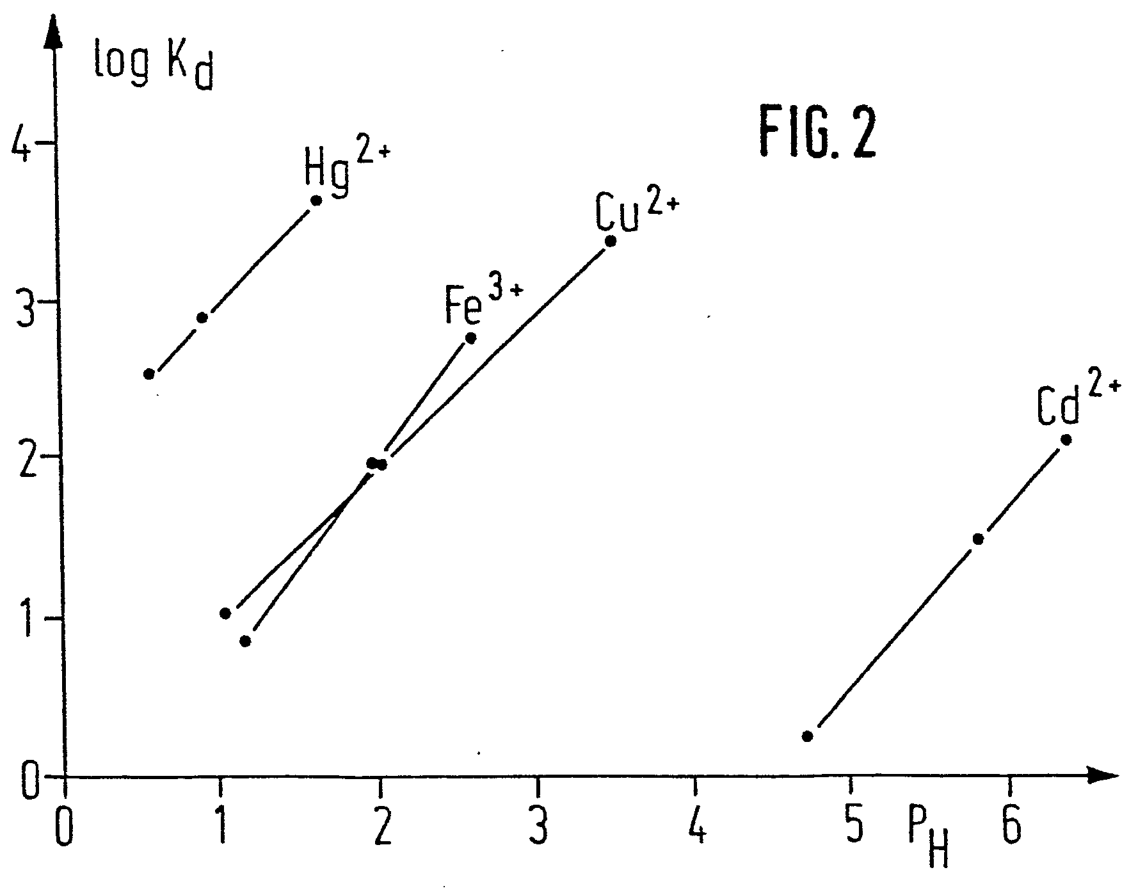
log Kd
4
3
2
1
0
0
1
2
3
4
5
PH
6
$Hg^{2+}$
$Cu^{2+}$
$Fe^{3+}$
$Cd^{2+}$

FIG. 3

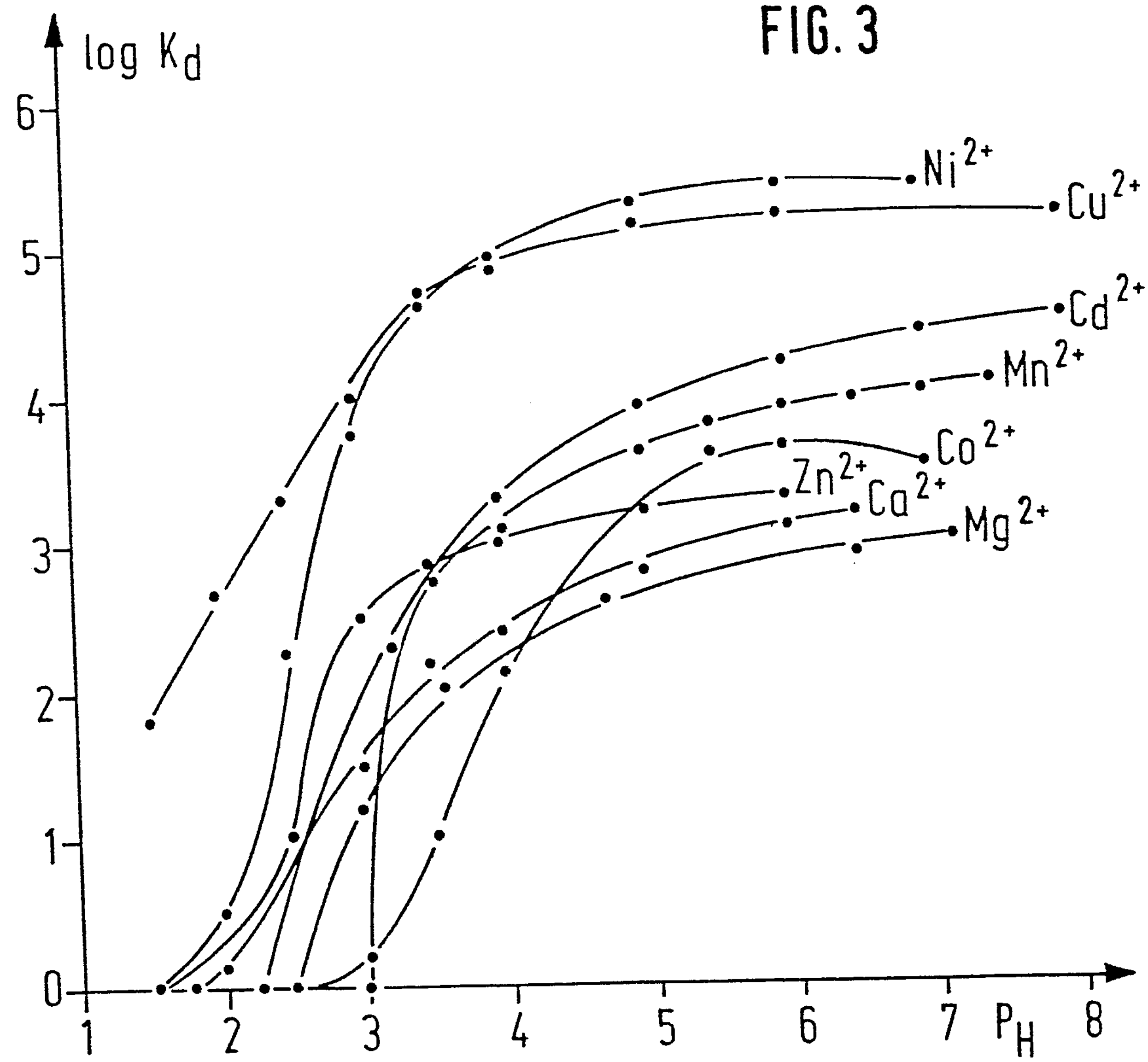

0014222

Europäisches Patentamt

# EUROPÄISCHER RECHERCHENBERICHT

Nummer der Anmeldung
EP 79 10 0358

## EINSCHLÄGIGE DOKUMENTE

| Kategorie | Kennzeichnung des Dokuments mit Angabe, soweit erforderlich, der maßgeblichen Teile | betrifft Anspruch | KLASSIFIKATION DER ANMELDUNG (Int.Cl. ³) |
|---|---|---|---|
| X | CHEMICAL ABSTRACTS, Band 70, 1969, Ref. 97535j, Seite 31. Columbus, Ohio, USA E.E. ERGOZHIN et al. "Synthesis and study of redox polymers". & Vestn. Akad. Nauk Kaz. SSR 1969, 25(2), 28-37. * Gesamte Artikel * -- | 1-4 | C 08 F 8/30<br>8/00<br>B 01 J 45/00 |
| X | CHEMICAL ABSTRACTS, 1948, Spalte 7791i. Columbus, Ohio, USA ANDERS SKAGSEID: "Macromolecular azo compounds". & NO - A - 73 344 (05-04-1948). * Gesamte Artikel * ---- | 1-4 | RECHERCHIERTE SACHGEBIETE (Int. Cl. ³)<br>C 08 F 8/00<br>8/30<br>8/32<br>8/34<br>8/36<br>8/28<br>B 01 J 45/00 |

KATEGORIE DER GENANNTEN DOKUMENTE
X: von besonderer Bedeutung
A: technologischer Hintergrund
O: nichtschriftliche Offenbarung
P: Zwischenliteratur
T: der Erfindung zugrunde liegende Theorien oder Grundsätze
E: kollidierende Anmeldung
D: in der Anmeldung angeführtes Dokument
L: aus andern Gründen angeführtes Dokument
&: Mitglied der gleichen Patentfamilie, übereinstimmendes Dokument

Der vorliegende Recherchenbericht wurde für alle Patentansprüche erstellt

| Recherchenort | Abschlußdatum der Recherche | Prüfer |
|---|---|---|
| Den Haag | 23-/1- 1979 | PEETERS J.C. |